(19) Europäisches Patentamt
European Patent Office
Office européen des brevets

(11) **EP 3 588 625 B1**

(12) **EUROPEAN PATENT SPECIFICATION**

(45) Date of publication and mention
of the grant of the patent:
**23.12.2020 Bulletin 2020/52**

(21) Application number: **19182859.9**

(22) Date of filing: **27.06.2019**

(51) Int Cl.:
*H01M 4/04* (2006.01)   *H01M 4/131* (2010.01)
*H01M 4/1315* (2010.01)   *H01M 4/1391* (2010.01)
*H01M 4/505* (2010.01)   *H01M 4/525* (2010.01)
*H01M 10/0525* (2010.01)

(54) **POSITIVE ELECTRODE PLATE AND LITHIUM-ION SECONDARY BATTERY**

POSITIVELEKTRODENPLATTE UND LITHIUM-IONEN-SEKUNDÄRBATTERIE

PLAQUE D'ÉLECTRODE POSITIVE ET BATTERIE SECONDAIRE AU LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2018 CN 201810690265**

(43) Date of publication of application:
**01.01.2020 Bulletin 2020/01**

(73) Proprietor: **Contemporary Amperex Technology
Co., Limited
Jiaocheng District
Ningde City, Fujian
352100 (CN)**

(72) Inventors:
• **LI, Zhiqiang
Ningde City, Fujian 352100 (CN)**
• **HAN, Changlong
Ningde City, Fujian 352100 (CN)**

(74) Representative: **Valea AB
Box 17067
200 10 Malmö (SE)**

(56) References cited:
**JP-A- 2006 252 895     US-A1- 2009 011 334
US-A1- 2014 099 551**

**Description**

**TECHNICAL FIELD**

The present application belongs to the field of secondary battery, in particular relates to a positive electrode plate and a lithium-ion secondary battery.

**BACKGROUND**

At present, lithium-ion secondary batteries occupy the core position of power batteries due to their advantages of high voltage platform, high specific energy, and no memory effect. The ternary material combines the advantages of three kinds of unary material. The preparation of the ternary material is relatively stable, and the cycle performance, energy density, weight specific capacity and volume specific capacity of the ternary material are high. Thus the ternary material is one of the preferred positive material for electric vehicle power batteries. However, when the temperature of the lithium-ion secondary battery rises, high-temperature decomposition occurs due to insufficient thermal stability of the ternary material, and oxygen is precipitated from the lattice of the composite metal oxide, resulting in an increase in internal pressure of the battery and an increase in battery temperature; at this time the battery is prone to smoke, fire, or even explode, making the safety performance of lithium-ion secondary batteries poor. In addition, the ternary material has strong oxidation when fully charged, which causes more side reactions between the ternary material and the electrolyte, further increasing the internal pressure of the battery and the battery temperature, and increasing the safety hazard of the lithium-ion secondary battery.

**SUMMARY**

Embodiments of the present application provide a positive electrode plate and a lithium-ion secondary battery, aiming to improve the safety performance of a lithium-ion secondary battery.

A first aspect of the embodiments of the present application provides a positive electrode plate, comprising: a positive electrode current collector; and a positive active material layer disposed on at least one surface of the positive electrode current collector, wherein the positive active material layer comprises a first positive active material represented by formula (1) and a second positive active material represented by formula (2),

$$Li_{1+x}Ni_aCo_bM_{1-a-b}O_{2-y}A_y \qquad (1)$$

in the formula (1), $-0.1 \leq x \leq 0.2$, $0 < a < 1$, $0 < b < 1$, $0 < a+b < 1$, $0 \leq y < 0.2$; M comprises one or more of Mn, Fe, Cr, Ti, Zn, V, Al, Zr and Ce; and A comprises one or more of S, N, F, Cl, Br and I,

$$Li_{1+z}Mn_cN_{2-c}O_{4-d}B_d \qquad (2)$$

in the formula (2), $-0.1 \leq z \leq 0.2$, $0 < c \leq 2$, $0 \leq d < 1$; N comprises one or more of Ni, Fe, Cr, Ti, Zn, V, Al, Mg, Zr and Ce; and B comprises one or more of S, N, F, Cl, Br and I;
wherein the positive electrode plate has a resistivity of 3500 $\Omega \cdot$m or less.

A second aspect of the embodiments of the present application provides a lithium-ion secondary battery comprising a positive electrode plate, a negative electrode plate, a separator, and an electrolyte, wherein the positive electrode plate is a positive electrode plate according to the first aspect of the embodiments of the present application.

A third aspect of the embodiments of the present application provides a process for preparing a positive electrode plate, comprising the steps of:

mixing a first positive active material, a conductive agent, a binder, and a solvent to prepare a pre-slurry;
mixing a second positive active material with the pre-slurry to form a positive electrode slurry; and
coating the positive electrode slurry onto at least one surface of a positive electrode current collector to prepare the positive electrode plate;
wherein the first positive active material is a compound represented by formula (1), and the second positive active material is a compound represented by formula (2),

$$Li_{1+x}Ni_aCo_bM_{1-a-b}O_{2-y}A_y \qquad (1)$$

in the formula (1), $-0.1 \leq x \leq 0.2$, $0 < a < 1$, $0 < b < 1$, $0 < a+b < 1$, $0 \leq y < 0.2$; M comprises one or more of Mn, Fe, Cr, Ti, Zn, V, Al, Zr and Ce; and A comprises one or more of S, N, F, Cl, Br and I,

$$Li_{1+z}Mn_cN_{2-c}O_{4-d}B_d \qquad (2)$$

in the formula (2), $-0.1 \leq z \leq 0.2$, $0 < c \leq 2$, $0 \leq$, $d < 1$; N comprises one or more of Ni, Fe, Cr, Ti, Zn, V, Al, Mg, Zr and Ce; and B comprises one or more of S, N, F, Cl, Br and I.

In the positive electrode plate and the lithium-ion secondary battery according to the embodiments of the present application, since that the positive active material layer comprises a first positive active material and a second positive active material and that the positive electrode plate has a resistivity of 3,500 $\Omega \cdot m$ or less, the synergistic effect between the two compounds can be sufficiently exhibited, thus the lithium-ion secondary battery has high specific capacity and energy density and excellent safety performance, and at the same time has excellent cycle performance and rate performance.

## DETAILED DESCRIPTION

In order to make the objects, technical solutions, and beneficial effects of the present application more clear, the present application will be further described in detail below with reference to the embodiments. It is to be understood that the embodiments described herein are merely illustrative of the invention and are not intended to limit the invention.
For the sake of brevity, only certain numerical ranges are explicitly disclosed herein. However, any lower limit may be combined with any upper limit to form a range that is not explicitly described; and any lower limit may be combined with any other lower limit to form an unspecified range, and any upper limit may be combined with any other upper limit to form an unspecified range. Further, although not explicitly stated, each point or single value between the endpoints of the range is included in the range. Thus, each point or single value can be combined with any other point or single value or combined with other lower or upper limits to form a range that is not explicitly recited.
In the description herein, it is to be noted that "above" and "below" are inclusive of the plural unless otherwise indicated, and the word "more" in "one or more" means two or more.
The above summary of the present application is not intended to describe each disclosed embodiment or every implementation. The following description more particularly exemplifies the exemplary embodiments. In many places throughout the application, guidance is provided through a series of embodiments that can be used in various combinations. In each instance, the list is merely representative and should not be construed as exhaustive.

## Positive electrode plate

A first aspect of an embodiments of the present application provides a positive electrode plate comprising a positive electrode current collector and a positive active material layer disposed on at least one surface of the positive electrode current collector, wherein the positive active material layer can perform reversible intercalation/deintercalation of lithium ions during operation, and the positive electrode current collector collects and outputs the generated current.
The positive active material layer comprises a first positive active material and a second positive active material, wherein the first positive active material is a compound represented by formula (1):

$$Li_{1+x}Ni_aCo_bM_{1-a-b}O_{2-y}A_y \qquad (1)$$

in the formula (1), $-0.1 \leq x \leq 0.2$, $0 < a < 1$, $0 < b < 1$, $0 < a+b < 1$, $0 \leq y < 0.2$; M comprises one or more of Mn, Fe, Cr, Ti, Zn, V, Al, Zr and Ce; and A comprises one or more of S, N, F, Cl, Br and I;
wherein the second positive active material is a compound represented by formula (2):

$$Li_{1+z}Mn_cN_{2-c}O_{4-d}B_d \qquad (2)$$

in the formula (2), $-0.1 \leq z \leq 0.2$, $0 < c \leq 2$, $0 \leq d < 1$; N comprises one or more of Ni, Fe, Cr, Ti, Zn, V, Al, Mg, Zr and Ce; and B comprises one or more of S, N, F, Cl, Br and I.
Further, the positive electrode plate has a resistivity of 3500 $\Omega \cdot m$ or less.
The positive electrode plate provided by the embodiments of the present application can sufficiently exhibit the synergistic effect between the first positive active material and the second positive active material, effectively improve the overcharge property, thermal stability, and strong oxidation property of the first positive active material., and reduce the high-temperature decomposition of the first positive active material and its side reaction with the electrolyte, and inhibit gas production, thereby improving the safety performance of lithium-ion secondary battery under the premise of ensuring high specific capacity and energy density of the lithium-ion secondary battery.
The synergistic effect of the first positive active material and the second positive active material can also effectively suppress the polarization increase of the first positive active material during the cycle, and reduce the *Jahn-Teller Effect* of the second positive active material, and reduce the gas production. Thereby the capacity loss due to polarization can be significantly reduced.

In particular, the positive electrode plate provided by the embodiments of the present application can improve the cycle performance and rate performance of the lithium-ion secondary battery while improving the safety performance of the lithium-ion secondary battery.

Preferably, the positive electrode plate has a resistivity of 2500 $\Omega \cdot$m or less; more preferably, the positive electrode plate has a resistivity of 1200 $\Omega \cdot$m or less.

The mass ratio of the first positive active material to the second positive active material is preferably from 3:7 to 99.5:0.5, more preferably from 35:65 to 95:5. This can better improve the rate performance, cycle performance and safety performance of the lithium-ion secondary battery.

Optionally, in the above formula (1), $-0.1 \leq x \leq 0.2$, $0.5 \leq a < 1$, $0 < b < 0.5$, $0.7 \leq a+b < 1$, $0 \leq y < 0.1$; M is one or two of Mn and Al; and A is one or two of S and F. In such case, a higher specific capacity and energy density can be achieved.

In addition, the positive active material layer may further comprise a conductive agent and a binder. The present application does not specifically limit the types of the conductive agent and the binder, and it can be selected according to actual needs.

As an example, the conductive agent may be one or more of graphite, superconducting carbon, acetylene black, carbon black, ketjen black, carbon dots, carbon nanotubes, graphene, and carbon nanofibers; the binder may be one or more of styrene butadiene rubber (SBR), water-based acrylic resin, carboxymethyl cellulose (CMC), polyvinylidene fluoride (PVDF), polytetrafluoroethylene (PTFE), polyvinyl butyral (PVB), ethylene-vinyl acetate copolymer (EVA) and polyvinyl alcohol (PVA).

In some optional embodiments, the mass ratio of the conductive agent to the positive active material is 1.5:95.5 or more, and the weight percentage of the binder in the positive active material layer is 2% by weight or less. This is advantageous to improve the cycle performance and rate performance of the lithium-ion secondary battery.

The positive electrode current collector may be a metal foil or a porous metal plate, for example, a foil or a porous plate of a metal such as aluminum, copper, nickel, titanium or silver or an alloy thereof, such as an aluminum foil. The thickness of the positive electrode current collector is preferably 5 $\mu$m to 20 $\mu$m, more preferably 6 $\mu$m to 18 $\mu$m, still more preferably 8 $\mu$m to 16 $\mu$m.

Next, a process for preparing a positive electrode plate of an embodiment of the present application is described below, comprising: mixing the positive active material with a binder, a conductive agent, and an organic solvent (for example, N-methylpyrrolidone, abbreviated as NMP) to form a positive electrode slurry; coating the positive electrode slurry on the positive electrode current collector; after drying, rolling and other processes, obtaining a positive electrode plate.

The positive active material comprises the above-described first positive active material and the above-described second positive active material. The first positive active material and the second positive active material may be simultaneously added, and the electrode plate can obtain a lower resistivity by adjusting the stirring process.

Of course, in other embodiments, the first positive active material and the second positive active material may be added in order. For example, in some preferred embodiments, the first positive active material is first mixed with a binder, a conductive agent, and an organic solvent to form a stable pre-slurry; then a predetermined amount of a second positive active material is added into the pre-slurry, mixed and stirred to prepare a positive electrode slurry. Such process is more conducive to reducing the resistivity of final electrode plate.

The positive electrode plate of the embodiments of the present application can be obtained by the above preparation process.

**Lithium-ion secondary battery**

A second aspect of the embodiments of the present application provides a lithium-ion secondary battery comprising: a positive electrode plate, a negative electrode plate, a separator, and an electrolyte.

The positive electrode plate uses the positive electrode plate according to the first aspect of the embodiments of the present application.

The negative electrode plate may be a lithium metal sheet, or may comprise a negative electrode current collector and a negative active material layer disposed on at least one surface of the negative electrode current collector.

The negative active material layer usually comprises a negative active material and optionally a conductive agent, a binder, and a thickener. As an example, the negative active material may be one or more or natural graphite, artificial graphite, meso-carbon microbeads (MCMB), hard carbon, soft carbon, silicon, silicon-carbon composite, SiO, Li-Sn alloy, Li-Sn-O alloy, Sn, SnO, $SnO_2$, spinel lithium titanate $Li4Ti_5O_{12}$, Li-Al alloy and metallic lithium; the conductive agent may be one or more of graphite, superconducting carbon, acetylene black, carbon black, ketjen black, carbon dots, carbon nanotubes, graphene and carbon nanofibers; the binder may be one or more of styrene butadiene rubber (SBR), polyvinylidene fluoride (PVDF), polytetrafluoroethylene (PTFE), polyvinyl butyral (PVB), water-based acrylic resin, and carboxymethyl cellulose (CMC); and the thickener may be carboxymethyl cellulose (CMC). However, the present application is not limited to these materials, and other materials which can be used as a negative active material, a conductive agent, a binder, and a thickener for lithium-ion batteries, can be used in the present application.

The material such as a metal foil or a porous metal plate may be used as a negative electrode current collector, for example, a foil or a porous plate of a metal such as copper, nickel, titanium or iron or an alloy thereof, such as a copper foil. The thickness of the negative electrode current collector is preferably 2 $\mu$m to 15 $\mu$m, more preferably 4 $\mu$m to 12 $\mu$m, still more preferably 5 $\mu$m to 10 $\mu$m.

The negative electrode plate can be prepared according to a conventional method in the art. The negative active material and the optional conductive agent, binder and thicker are usually dispersed in a solvent, for example, N-methylpyrrolidone (abbreviated as NMP) or deionized water to form a uniform negative electrode slurry, and then the negative electrode slurry is coated on the negative electrode current collector. After the steps of drying, cold pressing, slipping, and cutting, a negative electrode plate is obtained.

The above-mentioned separator is not particularly limited, and any well-known separator having a porous structure and having electrochemical stability and chemical stability can be used, such as a monolayer film or multilayer film of one or more of glass fiber, nonwoven fabric, polyethylene (PE), polypropylene (PP), and polyvinylidene fluoride (PVDF).

The above-mentioned electrolyte comprises an organic solvent and an electrolytic lithium salt. Preferably, the electrolyte has an ionic conductivity of K $\geq$ 6.8 mS/cm, and more preferably, the electrolyte has an ionic conductivity of K $\geq$ 7 mS/cm. This is more advantageous to improve the cycle performance and rate performance of the lithium-ion secondary battery.

As an example, the above-mentioned organic solvent may be a cyclic carbonate compound, a chain carbonate compound, or a combination thereof, such as one or more of ethylene carbonate (EC), propylene carbonate (PC), ethyl methyl carbonate (EMC), diethyl carbonate. Ester (DEC), dimethyl carbonate (DMC), methyl formate (MF), methyl acetate (MA), ethyl acetate (EA), propyl acetate (PA), methyl propionate (MP), ethyl propionate (EP), propyl propionate (PP), and methyl butyrate (MB).

As an example, the above electrolytic lithium salt may be one or more of $LiPF_6$ (lithium hexafluorophosphate), $LiBF_4$ (lithium tetrafluoroborate), $LiClO_4$ (lithium perchlorate), $LiAsF_6$ (lithium hexafluoroarsenate), LiFSI (lithium bis(fluorosulfonyl)imide), LiTFSI (lithium bis(trifluoromethanesulphonyl)imide), LiTFS (lithium trifluoromethanesulfonate), LiDFOB (lithium difluorooxalate borate), LiBOB (lithium bis(oxalate)borate), $LiPO_2F_2$ (lithium difluorophosphate), LiDFOP (lithium difluorodioxalate phosphate and LiTFOP (lithium tetrafluorooxalate phosphate). Preferably, the concentration of the electrolytic lithium salt in the electrolyte is 0.6 mol/L or more, further preferably 0.6 mol/L to 1.5 mol/L, and more preferably 0.8 mol/L to 1.2 mol/L.

The electrolyte may also contain a film-forming additive for positive electrode, and the film-forming additive for positive electrode can form an interface film having good lithium-transfer performance at the positive electrode interface, so that the electrochemical impedance is greatly reduced. Preferably, the film-forming additive for positive electrode is one or more of tris(trimethylsilyl)phosphate (TMSP), tris(trimethylsilyl)borate (TMSB), heptamethyldisilazane (HPMDS), and hexamethyldisilazane (HMDS), more preferably tris(trimethylsilane)phosphate (TMSP).

The film-forming additive for positive electrode is present in an amount of 0.01wt% to 5wt% based on the sum weight of the electrolyte, preferably 0.1wt% to 2wt%.

The electrolyte may also contain a gas-generating inhibitor, which can effectively isolate the positive active material from the electrolyte, further suppress gas production, and improve the safety performance of the lithium-ion secondary battery at high temperature. The gas-generating inhibitor is preferably a nitrile compound, more preferably one or more of succinonitrile, adiponitrile, glutaronitrile, pimeliconitrile, suberonitrile, terephthalonitrile, hexanetricarbonitrile, and 1,2,3-propanetricarbonitrile, more preferably one or more of succinonitrile, adiponitrile, glutaronitrile, and hexanetricarbonitrile.

The gas-generating inhibitor is present in an amount of 0.01wt% to 3wt% based on the sum weight of the electrolyte, preferably 0.1wt% to 2wt%.

When the nitrile compound is used together with the film-forming additive for positive electrode, the insufficient thermal stability of the interface film formed by the film-forming additive for positive electrode can be compensated, and the safety performance and cycle performance of the lithium-ion secondary battery at high temperature can be further improved.

The electrolyte may also contain other additives, such as one or more of vinylene carbonate (VC), vinyl ethylene carbonate (VEC), fluoroethylene carbonate (FEC), and ethylene sulfate (i.e. 1,3,2-dioxathiolane 2,2-dioxide, abbreviated as DTD).

The positive electrode plate, the separator and the negative electrode plate are stacked in order, so that the separator is placed between the positive electrode plate and the negative electrode plate to take a function of isolation, thereby obtaining a battery core. A battery core may also be obtained after winding. The battery core is placed in a package; after injection of an electrolyte, the package is sealed to prepare a lithium-ion secondary battery.

By the synergistic effect of the first positive active material and the second positive active material and the resistivity of the positive electrode plate of 3500 $\Omega \cdot m$ or less, the lithium-ion secondary battery has a high specific capacity and energy density. It also has excellent safety performance, as well as high rate performance and cycle life. Further, by using an electrolyte having a high ion conductivity and an additive having a low film-forming resistance, the rate performance and cycle performance of the lithium-ion secondary battery are better improved. In addition, the introduction of a gas-generating inhibitor further suppresses the gas production of the battery, and also compensates for the lack of thermal stability of the interface film formed by the film-forming additive for positive electrode, which is advantageous to improve the safety performance of the lithium-ion secondary battery. Therefore, the lithium-ion secondary battery provided by the embodiments of the present application has excellent overall electrochemical performance.

## Example

The following examples are intended to describe the disclosure of the present application, and are intended to be illustrative only, and various modifications and changes in the scope of the present disclosure will be apparent to those skilled in the art. All parts, percentages, and ratios reported in the following examples are by weight unless otherwise stated, and all reagents used in the examples are commercially available or synthetically obtained by conventional methods and are directly used without further processing, and the instruments used in the examples are commercially available.

### Example 1

Preparation of positive electrode plate

A first positive active material $LiNi_{0.8}Co_{0.1}Mn_{0.1}O_2$ was mixed with a conductive agent carbon black, a binder PVDF and an organic solvent NMP to form a stable pre-slurry; and a predetermined amount of a second positive active material $LiMn_2O_4$ was added into the pre-slurry, mixed and stirred to form a uniform positive electrode slurry; then the positive electrode slurry was coated on a positive electrode current collector aluminum foil, and after drying, cold pressing, slitting and cutting, a positive electrode piece was obtained, wherein the weight ratio Wr of the first positive active material $LiNi_{0.8}Co_{0.1}Mn_{0.1}O_2$, the second positive active material $LiMn_2O_4$, carbon black, and PVDF was 80:16:2:2.

Preparation of negative electrode plate

A negative active material graphite and a conductive agent carbon black, a thickener CMC and a binder SBR were dispersed in a solvent deionized water at a weight ratio of 96:1:1:2 to form a uniform negative electrode slurry; then the negative electrode slurry was coated on a negative current collector copper foil, and after drying, cold pressing, slitting, and cutting, a negative electrode sheet was obtained.

Preparation of electrolyte

Ethylene carbonate (EC), ethyl methyl carbonate (EMC) and diethyl carbonate (DEC) were uniformly mixed to obtain an organic solvent, and then 1 mol/L of $LiPF_6$ was uniformly dissolved in such organic solvent.

Preparation of lithium-ion secondary battery

The positive electrode plate, a separator and the negative electrode plate were stacked in order. A PP/PE/PP composite film was used as the separator, which was placed between the positive electrode plate and the negative electrode plate to take a function of isolation. Then the stack was wound into a battery core and packed in a soft casing. A soft pack battery was made after top side sealing and electrolyte injection.

### Examples 2-15

Different from Example 1, some relevant parameters in the preparation steps of the positive electrode plate and the preparation steps of the electrolyte were adjusted. Specific parameters were shown in Table 1.

### Comparative Examples 1~5

Different from Example 1, the preparation of the positive electrode plate includes: mixing the first positive active material $LiNi_{0.8}Co_{0.1}Mn_{0.1}O_2$, the second positive active material $LiMn_2O_4$, the conductive agent carbon black, the binder PVDF, and the organic solvent NMP and stirring to form a uniform positive electrode slurry; coating the positive electrode slurry on the positive electrode current collector aluminum foil; drying, cold pressing, slitting and cutting to obtain a positive electrode plate; and adjusting relevant parameters in the preparation steps of electrolyte. Specific parameters were shown in Table 1.

**Test**

(1) Resistivity test of positive electrode plate

The resistance of the positive electrode plate was measured by using the HSI BT3562 internal resistance tester, including: the positive electrode plate prepared in the examples and the comparative examples was cut into a square test sample of 10 cm×10 cm size, and the upper and lower sides of the test sample were clamped therein between the two conductive terminals of the resistance tester, and a certain pressure was applied to fix the sample; and then the resistance R of the test sample was measured. The diameter of the conductive terminal was 14 mm; the applied pressure was 15 MPa~27 MPa; and the sampling time was 5 s~17 s.

The resistivity p of the positive electrode plate was calculated according to the formula $\rho=R•S/L$, where S was the area of the test sample; L was the thickness of the test sample, i.e. the thickness of the positive electrode plate.

(2) Cycle performance test of lithium-ion secondary battery

The fresh lithium-ion secondary battery prepared in Examples and Comparative Examples was allowed to stand for 5 minutes at 45°C, and then charged at a constant current of 1 C to a voltage of 4.2 V, and charged at a constant voltage until the current was 0.05 C or less, and then allowed to stand for 5 minutes, and discharged at a constant current of 1 C to 3.0 V. This was a charge/discharge cycle. The discharge capacity of at this time was the discharge capacity at the first cycle. The lithium-ion secondary battery was subjected to 800 charge/discharge cycles in accordance with the above method. Discharge capacity in each cycle was recorded.

The capacity retention ratio (%) of the lithium-ion secondary battery after 800 1C/1C cycles at 45°C = discharge capacity at the 800th cycle / discharge capacity at the first cycle × 100%.

(3) Rate performance test of lithium-ion secondary battery

The fresh lithium-ion secondary battery prepared in Examples and Comparative Examples was allowed to stand for 5 minutes at 25°C, and charged at a constant current of 1 C to 4.2 V, and then charged at a constant voltage until the current was 0.05 C or less, and then allowed to stand for 5 minutes, and discharged at a constant current of 1 C to 3.0 V. Then 1 C rate discharge capacity of the lithium-ion secondary battery was obtained.

The fresh lithium-ion secondary battery prepared in Examples and Comparative Examples was allowed to stand for 5 minutes at 25°C, and charged at a constant current of 1 C to 4.2 V, and then charged at a constant voltage until the current was 0.05 C or less, and then allowed to stand for 5 minutes, and discharged at a constant current of 5 C to 3.0 V. Then the 5 C rate discharge capacity of the lithium-ion secondary battery was obtained.

The discharge capacity ratio (%) of the lithium-ion secondary battery = 5 C rate discharge capacity/ 1 C rate discharge capacity × 100%.

(4) Test of gas production performance of lithium-ion secondary battery at high temperature

The fresh lithium-ion secondary battery prepared in Examples and Comparative Examples was allowed to stand for 5 minutes, and charged at a constant current of 1 C to 4.2 V, and then charged at a constant voltage until the current was 0.05 C or less. At this time, the volume of the lithium-ion secondary battery was measured and recorded as V0. Then the lithium-ion secondary battery was placed in a constant temperature oven at 70°C; the battery was taken out every 2 days to measure the volume, and then returned to the constant temperature oven, and the volume of the lithium-ion secondary battery after 30 days of storage was measure and recorded as VI. In this test, the volume of the lithium-ion secondary battery was measured by using a drainage method

The volume expansion ratio (%) of the lithium-ion secondary battery after storage at 70°C for 30 days = (V1-V0)/V0 × 100%.

The test results of Examples 1-15 and Comparative Examples 1-5 were shown in Table 2.

Table 1

| | Positive active material | Wr | Organic solvent | Additive and content | K mS/cm |
|---|---|---|---|---|---|
| Example 1 | $LiNi_{0.8}Co_{0.1}Mn_{0.1}O_2$ /$LiMn_2O_4$ | 80:16:2:2 | 30EC:65EMC: 5DEC | / | 8.1 |
| Example 2 | $LiNi_{0.8}Co_{0.1}Mn_{0.1}O_2$ /$LiMn_2O_4$ | 80:16:2:2 | 30EC:65EMC: 5DEC | 0.2% TMSP | 8.1 |
| Example 3 | $LiNi_{0.8}Co_{0.1}Mn_{0.1}O_2$ /$LiMn_2O_4$ | 80:16:2:2 | 30EC:65EMC: 5DEC | 0.2% TMSP 0.5% Succinonitrile | 8.1 |
| Example 4 | $LiNi_{0.8}Co_{0.1}Mn_{0.1}O_2$ /$LiMn_2O_4$ | 80:16:2:2 | 30EC:65EMC: 5DEC | 0.2% TMSP 0.5% Adiponitrile | 8.1 |
| Example 5 | $LiNi_{0.8}Co_{0.1}Mn_{0.1}O_2$ /$LiMn_2O_4$ | 70:26:2:2 | 30EC:65EMC: 5DEC | 0.2% TMSP | 8.1 |
| Example 6 | $LiNi_{0.8}Co_{0.1}Mn_{0.1}O_2$ /$LiMn_2O_4$ | 56:40:2:2 | 30EC:65EMC: 5DEC | 0.2 %TMSP | 8.1 |
| Example 7 | $LiNi_{0.8}Co_{0.1}Mn_{0.1}O_2$ /$LiMn_2O_4$ | 56:40:2:2 | 30EC:65EMC: 5DEC | 2% TMSP | 7.9 |
| Example 8 | $LiNi_{0.8}Co_{0.1}Mn_{0.1}O_2$ /$LiMn_2O_4$ | 80:16.5:2: 1.5 | 20EC:65EMC: 15DEC | / | 6.5 |
| Example 9 | $LiNi_{0.8}Co_{0.1}Mn_{0.1}O_2$ /$LiMn_2O_4$ | 70:26:2:2 | 30EC:65EMC: 5DEC | / | 8.1 |
| Example 10 | $LiNi_{0.8}Co_{0.1}Mn_{0.1}O_2$ /$LiMn_2O_4$ | 56:40:2:2 | 30EC:65EMC: 5DEC | / | 8.1 |
| Example 11 | $LiNi_{0.6}Co_{0.2}Mn_{0.2}O_2$ /$LiMn_2O_4$ | 80:16:2:2 | 30EC:65EMC: 5DEC | 0.2% TMSP 0.5% Succinonitrile | 8.1 |
| Example 12 | $LiNi_{0.5}Co_{0.2}Mn_{0.3}O_2$ /$LiMn_2O_4$ | 80:16:2:2 | 30EC:65EMC: 5DEC | 0.2% TMSP 0.5% Succinonitrile | 8.1 |
| Example 13 | $LiNi_{1/3}Co_{1/3}Mn_{1/3}O_2$ /$LiMn_2O_4$ | 80:16:2:2 | 30EC:65EMC: 5DEC | 0.2% TMSP 0.5% Succinonitrile | 8.1 |
| Example 14 | $LiNi_{0.8}Co_{0.1}Mn_{0.1}O_2$ /$LiMn_2O_4$ | 91.2:4.8:2: 2 | 30EC:65EMC: 5DEC | 0.2% TMSP 0.5% Succinonitrile | 8.1 |
| Example 15 | $LiNi_{0.8}Co_{0.1}Mn_{0.1}O_2$ /$LiMn_2O_4$ | 93:3:2:2 | 30EC:65EMC: 5DEC | 0.2% TMSP 0.5% Succinonitrile | 8.1 |
| Comparative Example 1 | $LiNi_{0.8}Co_{0.1}Mn_{0.1}O_2$ /$LiMn_2O_4$ | 80:16:2:2 | 30EC:65EMC: 5DEC | / | 8.1 |
| Comparative Example 2 | $LiNi_{0.8}Co_{0.1}Mn_{0.1}O_2$ /$LiMn_2O_4$ | 80:16:2:2 | 30EC:65EMC: 5DEC | 0.2% TMSP | 8.1 |
| Comparative Example 3 | $LiNi_{0.8}Co_{0.1}Mn_{0.1}O_2$ /$LiMn_2O_4$ | 80:16:2:2 | 30EC:65EMC: 5DEC | 2% TMSP | 7.9 |

(continued)

|  | Positive active material | Wr | Organic solvent | Additive and content | K mS/cm |
|---|---|---|---|---|---|
| Comparative Example 4 | $LiNi_{0.8}Co_{0.1}Mn_{0.1}O_2$ /$LiMn_2O_4$ | 80:16:2:2 | 30EC:65EMC:5DEC | 5% TMSP | 7.6 |
| Comparative Example 5 | $LiNi_{0.8}Co_{0.1}Mn_{0.1}O_2$ /$LiMn_2O_4$ | 80:17:2:1 | 30EC:65EMC:5DEC | 5% TMSP | 7.6 |

Note: "/" in Table 1 indicates that there is no additive in the electrolyte; the content of the additive is a percentage by weight.

Table 2

|  | Resistivity of positive electrode plate /$\Omega \cdot m$ | Discharge capacity ratio /% | Capacity retention ratio after 800 cycles at 45°C and 1C/1C /% | Volume expansion ratio after storage at 70°C for 30 days /% |
|---|---|---|---|---|
| Example 1 | 1200 | 78.7 | 79.8 | 26.2 |
| Example 2 | 1200 | 83.4 | 83.8 | 29.1 |
| Example 3 | 1200 | 83.1 | 83.2 | 26.6 |
| Example 4 | 1200 | 83.5 | 83.2 | 25.9 |
| Example 5 | 2500 | 82.9 | 83.2 | 28.8 |
| Example 6 | 3500 | 79.6 | 80.0 | 29.8 |
| Example 7 | 3500 | 83.1 | 84.0 | 33 |
| Example 8 | 1200 | 76.4 | 77.5 | 25.9 |
| Example 9 | 2500 | 76.8 | 78.6 | 26.5 |
| Example 10 | 3500 | 75.1 | 77.5 | 26.4 |
| Example 11 | 1300 | 82.8 | 83.5 | 24.8 |
| Example 12 | 1450 | 83.0 | 84.0 | 20.5 |
| Example 13 | 1500 | 82.9 | 83.7 | 18.7 |
| Example 14 | 800 | 83.2 | 84.1 | 25.6 |
| Example 15 | 800 | 82.9 | 82.6 | 26.1 |
| Comparative Example 1 | 4000 | 69.4 | 71.4 | 27.8 |
| Comparative Example 2 | 4000 | 73.3 | 76.4 | 29.3 |
| Comparative Example 3 | 4000 | 73 | 76.7 | 32.5 |
| Comparative Example 4 | 4000 | 73.4 | 76.4 | 41.3 |
| Comparative Example 5 | 3800 | 72.7 | 75.1 | 42.1 |

Comparing the test results of Examples 1 and 8 to 10 with Comparative Example 1, it can be seen that, by making the positive electrode plate have a resistivity of 3500 $\Omega \cdot m$ or less, the charge and discharge cycle capacity at a high rate and the cycle performance at high temperature of the lithium-ion secondary battery were significantly improved. At the same time the gas production of the lithium-ion secondary battery was reduced, and the safety performance thereof was also improved.

Comparing the test results of Example 1 with Examples 2 and 5 to 7, it can be seen that, by making the positive electrode plate have a resistivity of 3500 $\Omega\cdot$m or less and further introducing TMSP, the charge and discharge cycle capacity at a high rate and the cycle performance at high temperature of the lithium-ion secondary battery were significantly improved.

Comparing the test results of Example 2 with Examples 3 and 4, it can be seen that, by further introducing a nitrile compound, it was advantageous to suppress gas production, and to make up for the lack of thermal stability of the interface film formed by TMSP at the positive electrode interface. Thus the resulting lithium-ion secondary battery had a significantly reduced gas production and improved safety performance.

It can be seen from the analysis of Comparative Examples 2 to 5 that, when the resistivity of the positive electrode plate was greater than 3500 $\Omega\bullet$m, even if the addition of TMSP was increased, the rate performance and cycle performance of the lithium-ion secondary battery cannot be improved, and the gas production of the battery was increased, and the safety performance of lithium-ion secondary batteries was decreased.

As can be seen from the test results of Examples 1 to 15, the present application enables the lithium-ion secondary battery to simultaneously achieve excellent safety performance, cycle performance, and rate performance.

It is also to be understood that the above-described embodiments may be modified and varied in accordance with the above teachings. Accordingly, the present application is not limited to the specific embodiments disclosed and described above, and modifications and variations of the present application are intended to be included within the scope of the claims of the present application. In addition, although some specific terminology is used in this specification, these terms are for convenience of illustration only and are not intended to limit the present application in any way.

**Claims**

1. A positive electrode plate, comprising:

    a positive electrode current collector; and
    a positive active material layer disposed on at least one surface of the positive electrode current collector, wherein the positive active material layer comprises a first positive active material represented by formula (1) and a second positive active material represented by formula (2),

    $$Li_{1+x}Ni_aCi_bM_{1-a-b}O_{2-y}A_y \qquad (1)$$

    in the formula (1), $-0.1{\leq}x{\leq}0.2$, $0<a<1$, $0<b<1$, $0<a+b<1$, $0{\leq}y<0.2$; M comprises one or more of Mn, Fe, Cr, Ti, Zn, V, Al, Zr and Ce; and A comprises one or more of S, N, F, Cl, Br and I,

    $$Li_{1+z}Mn_cN_{2-c}O_{4-d}B_d \qquad (2)$$

    in the formula (2), $-0.1 \leq z \leq 0.2$, $0 < c \leq 2$, $0 \leq d < 1$; N comprises one or more of Ni, Fe, Cr, Ti, Zn, V, Al, Mg, Zr and Ce; and B comprises one or more of S, N, F, Cl, Br and I; and
    wherein the positive electrode plate has a resistivity of 3500 $\Omega\bullet$m or less, wherein the resistivity is measured according to the description.

2. The positive electrode plate according to claim 1, wherein the positive electrode plate has a resistivity of 2500 $\Omega\bullet$m or less, preferably 1200 $\Omega\bullet$m or less.

3. The positive electrode plate according to claim 1, wherein in the formula (1), $0.5 \leq a < 1$, $0 < b < 0.5$, $0.7 \leq a + b < 1$, $0 \leq y < 0.1$; M is one or two of Mn and Al, and A is one or two of S and F.

4. The positive electrode plate according to claim 1, wherein the first positive active material and the second positive active material have a mass ratio of 3:7 to 99.5:0.5, preferably 35:65 to 95:5.

5. A lithium-ion secondary battery comprising:

    a negative electrode plate;
    a separator;
    an electrolyte; and
    a positive electrode plate according to any one of claims 1 to 4.

6.  The lithium-ion secondary battery according to claim 5, wherein the electrolyte has an ionic conductivity of 6.8 mS/cm or more, preferably 7 mS/cm or more.

7.  The lithium-ion secondary battery according to claim 5, wherein the electrolyte contains a film-forming additive for positive electrode, and the film-forming additive for positive electrode is one or more of tris(trimethylsilyl)phosphate TMSP, tris(trimethylsilyl)boronate (TMSB), heptamethyldisilazane (HPMDS), and hexamethyldisilazane (HMDS).

8.  The lithium-ion secondary battery according to claim 7, wherein the film-forming additive for positive electrode is present in an amount of 0.01wt% to 5wt% based on the sum weight of the electrolyte, preferably 0.1wt% to 2wt%.

9.  The lithium-ion secondary battery according to claim 5, wherein the electrolyte contains a gas-generating inhibitor, and the gas-generating inhibitor is one or more of succinonitrile, adiponitrile, glutaronitrile, pimeliconitrile, suberonitrile, terephthalonitrile, hexanetricarbonitrile and 1,2,3-propanetricarbonitrile.

10. The lithium-ion secondary battery according to claim 9, wherein the gas-generating inhibitor is present in an amount of 0.01wt% to 3wt% based on the sum weight of the electrolyte, preferably 0.1wt% to 2wt%.

11. A process for preparing a positive electrode plate, comprising the steps of:

mixing a first positive active material, a conductive agent, a binder, and a solvent to prepare a pre-slurry;
mixing a second positive active material with the pre-slurry to form a positive electrode slurry; and
coating the positive electrode slurry onto at least one surface of a positive electrode current collector to prepare the positive electrode plate;
wherein the first positive active material is a compound represented by formula (1), and the second positive active material is a compound represented by formula (2),

$$Li_{1+x}Ni_aCo_bM_{1-a-b}O_{2-y}A_y \qquad (1)$$

in the formula (1), $-0.1 \leq x \leq 0.2$, $0 < a < 1$, $0 < b < 1$, $0 < a+b < 1$, $0 \leq y < 0.2$; M comprises one or more of Mn, Fe, Cr, Ti, Zn, V, Al, Zr and Ce; and A comprises one or more of S, N, F, Cl, Br and I,

$$Li_{1+z}Mn_cN_{2-c}O_{4-d}B_d \qquad (2)$$

in the formula (2), $-0.1 \leq z \leq 0.2$, $0 < c \leq 2$, $0 \leq d < 1$; N comprises one or more of Ni, Fe, Cr, Ti, Zn, V, Al, Mg, Zr and Ce; and B comprises one or more of S, N, F, Cl, Br and I.

**Patentansprüche**

1.  Positive Elektrodenplatte, umfassend:

einen positiven Elektrodenstromabnehmer; und
eine positive aktive Materialschicht, die auf mindestens einer Oberfläche des positiven Elektrodenstromabnehmers angeordnet ist, wobei die positive aktive Materialschicht ein durch Formel (1) dargestelltes erstes positives aktives Material und ein durch Formel (2) dargestelltes zweites positives aktives Material umfasst,

$$Li_{1+x}Ni_aCo_bM_{1-a-b}O_{2-y}A_y \qquad (1)$$

in der Formel (1) $-0,1 \leq x \leq 0,2$, $0 < a < 1$, $0 < b < 1$, $0 < a+b < 1$, $0 \leq y < 0,2$; M eines oder mehrere von Mn, Fe, Cr, Ti, Zn, V, Al, Zr und Ce umfasst; und A eines oder mehrere von S, N, F, Cl, Br und I umfasst,

$$Li_{1+z}Mn_cN_{2-c}O_{4-d}B_d \qquad (2)$$

in der Formel (2) $-0,1 \leq z \leq 0,2$, $0 < c \leq 2$, $0 \leq d < 1$; N eines oder mehrere von Ni, Fe, Cr, Ti, Zn, V, Al, Mg, Zr und Ce umfasst; und B eines oder mehrere von S, N, F, Cl, Br und I umfasst; und wobei die positive Elektrodenplatte einen spezifischen Widerstand von 3500 $\Omega \cdot m$ oder weniger aufweist, wobei der spezifische Widerstand gemäß der Beschreibung gemessen ist.

**2.** Positive Elektrodenplatte nach Anspruch 1, wobei die positive Elektrodenplatte einen spezifischen Widerstand von 2500 $\Omega$·m oder weniger, vorzugsweise 1200 $\Omega$·m oder weniger aufweist.

**3.** Positive Elektrodenplatte nach Anspruch 1, wobei in der Formel (1) $0{,}5 \leq a < 1$, $0 < b < 0{,}5$, $0{,}7 \leq a+b < 1$, $0 \leq y < 0{,}1$; M eins oder zwei von Mn und Al ist und A eins oder zwei von S und F ist.

**4.** Positive Elektrodenplatte nach Anspruch 1, wobei das erste positive aktive Material und das zweite positive aktive Material ein Massenverhältnis von 3: 7 bis 99,5: 0,5, vorzugsweise 35:65 bis 95: 5 aufweisen.

**5.** Lithium-Ionen-Sekundärbatterie, umfassend:

eine negative Elektrodenplatte;
einen Separator;
einen Elektrolyt; und
eine positive Elektrodenplatte nach einem der Ansprüche 1 bis 4.

**6.** Lithium-Ionen-Sekundärbatterie nach Anspruch 5, wobei der Elektrolyt eine Ionenleitfähigkeit von 6,8 mS/cm oder mehr, vorzugsweise 7 mS/cm oder mehr aufweist.

**7.** Lithium-Ionen-Sekundärbatterie nach Anspruch 5, wobei der Elektrolyt ein filmbildendes Additiv für die positive Elektrode enthält und das filmbildende Additiv für die positive Elektrode eines oder mehrere von Tris(trimethylsilyl)phosphat TMSP, Tris(trimethylsilyl)Boronat (TMSB), Heptamethyldisilazan (HPMDS) und Hexamethyldisilazan (HMDS) ist.

**8.** Lithium-Ionen-Sekundärbatterie nach Anspruch 7, wobei das filmbildende Additiv für die positive Elektrode in einer Menge von 0,01 Gew.-% bis 5 Gew.-% vorhanden ist, bezogen auf das Gesamtgewicht des Elektrolyten, vorzugsweise 0,1 Gew.-% bis 2 Gew.-%.

**9.** Lithium-Ionen-Sekundärbatterie nach Anspruch 5, wobei der Elektrolyt einen gaserzeugenden Inhibitor enthält und der gaserzeugende Inhibitor eines oder mehrere von Succinonitril, Adiponitril, Glutaronitril, Pimeliconitril, Suberonitril, Terephthalonitril, Hexantricarbonitril und 1,2,3-Propantricarbonitril ist.

**10.** Lithium-Ionen-Sekundärbatterie nach Anspruch 9, wobei der gaserzeugende Inhibitor in einer Menge von 0,01 Gew.-% bis 3 Gew.-% vorhanden ist, bezogen auf das Gesamtgewicht des Elektrolyten, vorzugsweise 0,1 Gew.-% bis 2 Gew.-%.

**11.** Verfahren zur Herstellung einer positiven Elektrodenplatte, umfassend die Schritte:

Mischen von einem ersten positiven aktiven Material, einem leitenden Mittel, einem Bindemittel und einem Lösungsmittel zur Herstellung einer Voraufschlämmung;
Mischen eines zweiten positiven aktiven Materials mit der Voraufschlämmung zur Bildung einer positiven Elektrodenaufschlämmung; und
Beschichten der positiven Elektrodenaufschlämmung auf mindestens eine Oberfläche eines positiven Elektrodenstromabnehmers zur Herstellung der positiven Elektrodenplatte;
wobei das erste positive aktive Material eine durch Formel (1) dargestellte Verbindung ist und das zweite positive aktive Material eine durch Formel (2) dargestellte Verbindung ist;

$$Li_{1+x}Ni_aCo_bM_{1-a-b}O_{2-y}A_y \qquad (1)$$

in der Formel (1) $-0{,}1 \leq x \leq 0{,}2$, $0 < a < 1$, $0 < b < 1$, $0 < a+b < 1$, $0 \leq y < 0{,}2$; M eines oder mehrere von Mn, Fe, Cr, Ti, Zn, V, Al, Zr und Ce umfasst; und A eines oder mehrere von S, N, F, Cl, Br und I umfasst,

$$Li_{1+z}Mn_cN_{2-c}O_{4-d}B_d \qquad (2)$$

in der Formel (2) $-0{,}1 \leq z \leq 0{,}2$, $0 < c \leq 2$, $0 \leq d < 1$; N eines oder mehrere von Ni, Fe, Cr, Ti, Zn, V, Al, Mg, Zr und Ce umfasst; und B eines oder mehrere von S, N, F, Cl, Br und I umfasst.

**Revendications**

1. Plaque d'électrode positive, comprenant :

   un collecteur de courant d'électrode positive ; et
   une couche de matériaux actifs positifs disposée sur au moins une surface du collecteur de courant d'électrode positive, dans laquelle la couche de matériaux actifs positifs comprend un premier matériau actif positif représenté par la formule (1) et un second matériau actif positif représenté par la formule (2),

$$Li_{1+x}Ni_aCo_bM_{1-a-b}O_{2-y}A_y \qquad (1)$$

   dans la formule (1), $-0,1 \le x \le 0,2$, $0 < a < 1$, $0 < b < 1$, $0 < a+b < 1$, $0 \le y < 0,2$ ; M comprend un ou plusieurs éléments parmi Mn, Fe, Cr, Ti, Zn, V, Al, Zr et Ce ; et A comprend un ou plusieurs éléments parmi S, N, F, Cl, Br et I,

$$Li_{1+z}Mn_cN_{2-c}O_{4-d}B_d \qquad (2)$$

   dans la formule (2), $-0,1 \le z \le 0,2$, $0 < c < 2$, $0 \le d < 1$ ; N comprend un ou plusieurs éléments parmi Ni, Fe, Cr, Ti, Zn, V, Al, Mg, Zr et Ce ; et B comprend un ou plusieurs éléments parmi S, N, F, Cl, Br et I ; et
   dans laquelle la plaque d'électrode positive a une résistivité inférieure ou égale à 3500 $\Omega \cdot$m, dans laquelle la résistivité est mesurée selon la description.

2. Plaque d'électrode positive selon la revendication 1, dans laquelle la plaque d'électrode positive a une résistivité inférieure ou égale à 2500 $\Omega \cdot$m, de préférence inférieure ou égale à 1200 $\Omega \cdot$m.

3. Plaque d'électrode positive selon la revendication 1, dans laquelle, dans la formule (1), $0,5 \le a < 1$, $0 < b < 0,5$, $0,7 \le a+b < 1$, $0 \le y < 0,1$ ; M est constitué d'un ou deux éléments parmi Mn et Al et A est constitué d'un ou deux éléments parmi S et F.

4. Plaque d'électrode positive selon la revendication 1, dans laquelle le premier matériau actif positif et le second matériau actif positif ont un rapport massique compris entre 3:7 et 99,5:0,5, de préférence entre 35:65 et 95:5.

5. Batterie secondaire au lithium-ion comprenant :

   une plaque d'électrode négative ;
   un séparateur ;
   un électrolyte ; et
   une plaque d'électrode positive selon l'une quelconque des revendications 1 à 4.

6. Batterie secondaire au lithium-ion selon la revendication 5, dans laquelle l'électrolyte a une conductivité ionique supérieure ou égale à 6,8 mS/cm, de préférence supérieure ou égale à 7 mS/cm.

7. Batterie secondaire au lithium-ion selon la revendication 5, dans laquelle l'électrolyte contient un additif de formation de film pour électrode positive et l'additif de formation de film pour électrode positive est constitué d'une ou plusieurs matières parmi le tris(triméthylsilyl)phosphate (TMSP), le tris(triméthylsilyl)boronate (TMSB), l'heptaméthyldisilazane (HPMDS) et l'hexaméthyldisilazane (HMDS).

8. Batterie secondaire au lithium-ion selon la revendication 7, dans laquelle l'additif de formation de film pour électrode positive est présent en une quantité de 0,01 % en poids à 5 % en poids sur la base du poids total de l'électrolyte, de préférence de 0,1 % en poids à 2 % en poids.

9. Batterie secondaire au lithium-ion selon la revendication 5, dans laquelle l'électrolyte contient un inhibiteur de génération de gaz et l'inhibiteur de génération de gaz est constitué d'une ou plusieurs matières parmi le succinonitrile, l'adiponitrile, le glutaronitrile, le pimeliconitrile, le suberonitrile, le téréphtalonitrile, l'hexanetricarbonitrile et le 1,2,3-propanetricarbonitrile.

10. Batterie secondaire au lithium-ion selon la revendication 9, dans laquelle l'inhibiteur de génération de gaz est présent en une quantité de 0,01 % en poids à 3 % en poids sur la base du poids total de l'électrolyte, de préférence de 0,1 % en poids à 2 % en poids.

11. Processus de préparation d'une plaque d'électrode positive, comprenant les étapes consistant à :

mélanger un premier matériau actif positif, un agent conducteur, un liant et un solvant de façon à préparer une bouillie préliminaire ;
mélanger un second matériau actif positif à la bouillie préliminaire de façon à former une bouillie d'électrode positive ; et
déposer la bouillie d'électrode positive sur au moins une surface d'un collecteur de courant d'électrode positive de façon à préparer la plaque d'électrode positive ;
dans lequel le premier matériau actif positif est un composé représenté par la formule (1) et le second matériau actif positif est un composé représenté par la formule (2),

$$Li_{1+x}Ni_aCo_bM_{1-a-b}O_{2-y}A_y \qquad (1)$$

dans la formule (1), $-0,1 \leq x \leq 0,2$, $0 < a < 1$, $0 < b < 1$, $0 < a+b < 1$, $0 \leq y < 0,2$ ; M comprend un ou plusieurs éléments parmi Mn, Fe, Cr, Ti, Zn, V, Al, Zr et Ce ; et A comprend un ou plusieurs éléments parmi S, N, F, Cl, Br et I,

$$Li_{1+z}Mn_cN_{2-c}O_{4-d}B_d \qquad (2)$$

dans la formule (2), $-0,1 \leq z \leq 0,2$, $0 < c \leq 2$, $0 \leq d < 1$ ; N comprend un ou plusieurs éléments parmi Ni, Fe, Cr, Ti, Zn, V, Al, Mg, Zr et Ce; et B comprend un ou plusieurs éléments parmi S, N, F, Cl, Br et I.